(19) **Europäisches Patentamt**
European Patent Office
Office européen des brevets

(11) **EP 1 445 855 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(51) Int Cl.:
*H02P 5/00* (2006.01)    *B60L 15/32* (2006.01)

(21) Anmeldenummer: **03104302.9**

(22) Anmeldetag: **21.11.2003**

(54) **Antriebsanordnung und Verfahren um den Wirkungsgrad zu verbessern**

Drive apparatus and method for improving the efficiency

Dispositif d'entraînement et méthode pour améliorer le rendement

(84) Benannte Vertragsstaaten:
**DE FR GB IT**

(30) Priorität: **05.02.2003 DE 10304610**

(43) Veröffentlichungstag der Anmeldung:
**11.08.2004 Patentblatt 2004/33**

(73) Patentinhaber: **ROBERT BOSCH GMBH**
**70442 Stuttgart (DE)**

(72) Erfinder:
• **Grob, Ferdinand**
  **74354, Besigheim (DE)**
• **Hoetzer, Dieter**
  **71701, Schwieberdingen (DE)**
• **Schnelle, Klaus-Peter**
  **71254, Ditzingen (DE)**

(56) Entgegenhaltungen:
**EP-A- 0 838 359      WO-A-93/05567**
**US-A- 5 365 153      US-A1- 2001 049 570**
**US-B1- 6 248 036      US-B2- 6 416 437**

**Beschreibung**

Die Erfindung betrifft eine Anordnung zur Wandlung von elektrischer in mechanische Energie und umgekehrt, insbesondere zum Antreiben eines Fahrzeugs und zur Energierückgewinnung bei dessen Abbremsung, mit den Merkmalen des Patentanspruchs 1 sowie ein Verfahren zum Betrieb einer derartigen Anordnung mit den Merkmalen des Patentanspruchs 20.

Stand der Technik

Bekannte Anordnungen von Elektromaschinen als Antrieb und/oder zur Energiegewinnung weisen grundsätzlich zumindest eine Elektromaschine auf. Diese Elektromaschine kann bspw. ein als Antriebsmaschine eingesetzter Elektromotor sein. Ein als Fahrzeugantrieb eingesetzter Elektromotor kann entweder direkt oder über ein Getriebe mit einem Abtrieb verbunden sein. Der Wirkungsgrad von elektrischen Maschinen ist je nach Bauform vom abgegebenen Drehmoment sowie von der aktuellen Drehzahl abhängig. Da insbesondere bei Fahrzeugantrieben sehr unterschiedliche Drehmoment- und Drehzahlanforderungen auftreten, ergeben sich je nach momentanem Betriebszustand der Elektromaschine Betriebspunkte mit unterschiedlichsten Wirkungsgraden.

Ein zwischen Elektromaschine und Abtrieb befindliches Getriebe kann als Drehzahlwandler eingesetzt werden und ermöglicht eine Verbesserung des Gesamtwirkungsgrades. Allerdings wird aus Gründen eines möglichst kompakten Antriebs, eines einfachen Aufbaus und wegen der relativ günstigen Momentenkennlinie von Elektromaschinen üblicherweise kein Getriebe eingesetzt. Die Maximaldrehzahlen des Elektromotors begrenzen in diesem Fall jedoch meist die erzielbaren Höchstgeschwindigkeiten des Fahrzeugs.

Typische installierte Leistungen bei Antrieben für Straßenfahrzeuge reichen von ca. 3 kW bis ca. 70 kW. Reine Elektrofahrzeuge benötigen zur Energiespeicherung Akkumulatoren. Mit einer Ladung dieser Akkus sind typische Reichweiten von ca. 20 bis 200 km möglich. Größere Reichweiten werden meist durch das dafür notwendige Akkumulatorengewicht begrenzt. Diese im Vergleich zu herkömmlichen Antrieben mit Verbrennungsmotoren unzureichenden Reichweiten und die aufgrund der großen Batterien verhältnismäßig hohen Fahrzeuggewichte haben bisher eine flächendeckende Verbreitung von Elektrofahrzeugen verhindert.

Beim Einsatz von Brennstoffzellen als Energielieferant im mobilen Einsatz ist mit einer bedeutenden Anzahl von eingesetzten Elektrofahrzeugen zu rechnen. Allerdings gelten für diese Elektrofahrzeuge die gleichen grundsätzlichen Einschränkungen hinsichtlich ihres Wirkungsgrades bei der Wandlung der elektrischen Energie in Antriebsenergie. Um den Kundenanforderungen zu genügen, müssen Brennstoffzellenfahrzeuge übliche Höchstgeschwindigkeiten erreichen. Ein Elektroantrieb ohne Getriebe muss in der Lage sein, den gesamten Geschwindigkeitsbereich zwischen Null und ca. 150 bis 180 km/h ($v_{max}$) abzudecken.

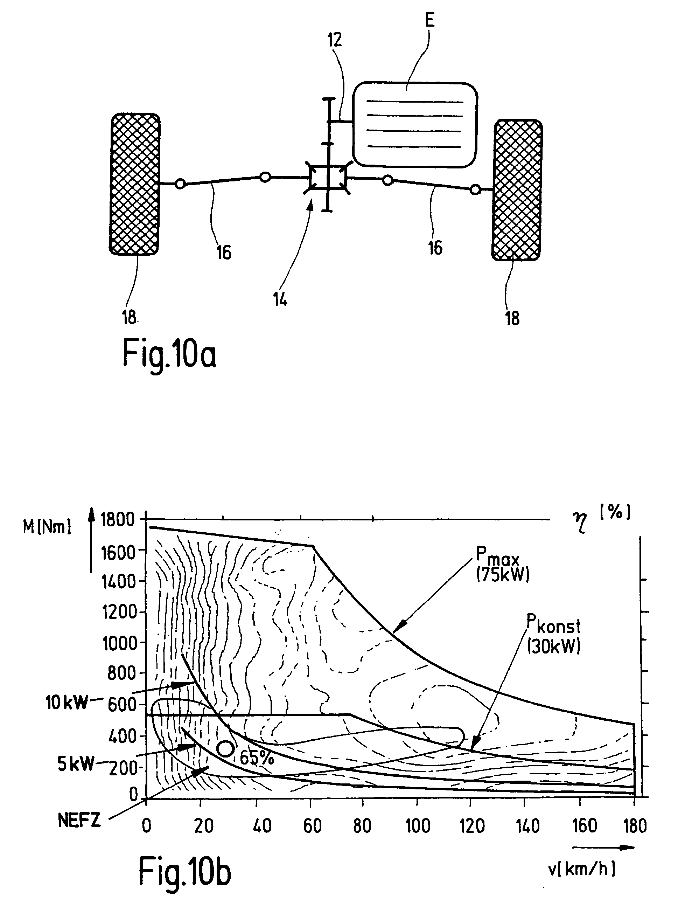

Figur 10a zeigt ein vereinfachtes Prinzip eines herkömmlichen Elektroantriebs mit nur einer Elektromaschine. Eine Motorabtriebswelle 12 der Elektromaschine E treibt über ein Differenzialgetriebe 14 zwei Antriebswellen 16 an, die zum Antrieb von Rädern 18 eines Fahrzeugs (nicht dargestellt) dienen.

Figur 10b verdeutlicht in einem Betriebskennfeld typische Zusammenhänge zwischen einem Motordrehmoment M, einer Fahrgeschwindigkeit v und einem Antriebswirkungsgrads η. Die Fahrgeschwindigkeit ist hierbei direkt proportional zur Motordrehzahl n, da die Elektromaschine E ohne zwischengeschalteten Drehzahlwandler mit den Fahrzeugrädern 18 gekoppelt ist. Die Elektromaschine E kann eine Spitzenleistung $P_{max}$ von ca. 75 kW und eine Dauerleistung $P_{konst}$ von ca. 30 kW liefern. Bei typischen Elektromaschinen wie bspw. bei Synchron- oder Asynchronmotoren sinkt das Ausgangsdrehmoment mit zunehmender Drehzahl ab. Das maximale Drehmoment steht bei niedrigen Drehzahlen zur Verfügung, so dass die Maschine ein hohes Anfahrdrehmoment liefern kann. Im gezeigten Kennfeld sind Wirkungsgradlinien als Höhenlinien dargestellt, wobei deutlich wird, dass ein maximaler Wirkungsgrad η von ca. 90 % bei einer Geschwindigkeit von ca. 100 bis 130 km/h und einem Ausgangsmoment von ca. 300 bis 700 Nm zur Verfügung steht. Es sind weiterhin zwei beispielhafte Kennlinien für eine Ausgangsleistung von P = 5 kW sowie von P = 10 kW dargestellt, für die der Wirkungsgrad jeweils weniger als 80 % beträgt. Ein standardisierter Fahrzyklus NEFZ bildet einen durchschnittlichen Betrieb eines Fahrzeugs nach und ist als umgrenzter Bereich im Diagramm eingezeichnet. Bei diesem Fahrzyklus arbeitet der Elektroantrieb in einem Wirkungsgradbereich von durchschnittlich nur ca. 65 %.

Aus der US-A-5,365,153 sind Anordnungen und Verfahren zur Wandlung von elektrischer in mechanische Energie und umgekehrt bekannt, die beispielsweise zum Antrieb eines Fahrzeugs und/oder zur Energierückgewinnung bei dessen Abbremsung eingesetzt wird. Dabei umfasst die Anordnung wenigstens zwei Elektromaschinen unterschiedlicher Bauart, wobei eine als Synchronmaschine und eine als Asynchronmaschine arbeitet. Die beiden Elektromaschinen sind über ein mit einer Abtriebswelle gekoppeltes Zwischengetriebe miteinander verbunden. Eine Steuerungseinrichtung zur variablen Steuerung der Elektromaschinen in Abhängigkeit einer Drehzahlanforderung und/oder einer Drehmomentanforderung an der Abtriebswelle ist vorhanden.

Aus der Druckschrift US-B2-6,414,437 ist ein Hybridfahrzeug bekannt, das eine mit dem Verbrennungsmotor über ein Zwischengetriebe koppelbare elektrische Maschine aufweist. Zusätzlich ist eine weitere elektrische Maschine vorhanden, die mit der Brennkraftmaschine und der ersten elektrischen Maschine über ein Zwischengetriebe gekoppelt werden kann. Zwischen einer der elektrischen Maschinen und dem Zwischengetriebe ist eine Freilaufeinrichtung vorgesehen.

Aus der Druckschrift WO 93/05567 ist ein computergesteuertes Fahrzeugantriebssystem, das wenigstens zwei Elektromotoren umfasst, die miteinander über ein Zwischengetriebe verbunden sind, bekannt. Das Zwischengetriebe wird als Planetengetriebe dargestellt. Bezüglich der Elektromotoren wird in der Entgegenhaltung D3 nicht erwähnt, ob die Motoren von gleicher oder unterschiedlicher Bauart oder Dimensionierung sind.

Die EP-A-0 838 359, die US-B1-6,248,036 und die US 2001/049570 A1 zeigen jeweils Anordnungen und Verfahren zur Wandlung von elektrischer in mechanische Energie und umgekehrt und betreffen insbesondere Fahrzeugantriebe, die mit einer Kombination von wenigstens zwei elektrischen Maschinen arbeiten.

Vorteile der Erfindung

Eine Anordnung gemäß Anspruch 1 zur Wandlung von elektrischer in mechanische Energie und umgekehrt umfasst wenigstens zwei Elektromaschinen, die über ein Zwischengetriebe miteinander gekoppelt sind. Die Elektromaschinen sind mittels einer Steuerungseinrichtung in Abhängigkeit einer Drehzahlanforderung und/oder einer Drehmomentanforderung an einer Abtriebswelle des Zwischengetriebes variabel steuerbar. Die erfindungsgemäße Anordnung eignet sich insbesondere zum Antrieb eines Fahrzeugs und/oder zur Energierückgewinnung bei dessen Abbremsung. Durch die Koppelung von zumindest zwei Elektromaschinen über ein Zwischengetriebe kann zumindest eine der Elektromaschinen in einem günstigen Wirkungsgradbereich betrieben werden, während die andere Elektromaschine entweder abgeschaltet ist, mit geringerer Leistung in einem ungünstigeren Wirkungsgradbereich oder mit gleicher Leistung im günstigen Wirkungsgradbereich betrieben werden kann. Während eine herkömmliche Antriebsanordnung mit nur einer Elektromaschine in einem Teillastbetrieb in einem ungünstigen Wirkungsgradbereich betrieben werden muss, kann mit der erfindungsgemäßen Anordnung ein Teillastbetrieb mit einer kleineren Maschine ermöglicht werden, während die andere, variabel zuschaltbare Elektromaschine abgeschaltet bleibt.

Die jeweils abschaltbare Elektromaschine wird über eine Freilaufeinrichtung mit dem Zwischengetriebe gekoppelt sein, so dass ein Antriebsmoment der jeweils eingeschalteten Maschine über den in einer Richtung sperrenden Freilauf abgestützt werden kann. Ggf. kann die Freilaufeinrichtung entsperrbar und/oder in ihrer Sperrrichtung umschaltbar sein, so dass auch ein Generatorbetrieb mit nur einer Elektromaschine in gleicher Weise ermöglicht ist.

Eine vorteilhafte Ausgestaltung kann in der Verwendung unterschiedlicher Elektromaschinen bestehen. So kann bspw. eine der Elektromaschinen eine Synchronmaschine sein, die bei niedrigen Drehzahlen einen sehr guten Wirkungsgrad aufweist. Durch Verwendung einer Asynchronmaschine als weitere Elektromaschine kann bei höheren Drehzahlen ein guter Wirkungsgrad erzielt werden. Auf diese Weise können durch eine geeignete Steuer- oder Regelstrategie die Vorteile beider Maschinentypen kombiniert werden. Bspw. kann ein Teillastbereich mit niederen Geschwindigkeiten und teilweise hohen Drehmomentanforderungen mit einem hohen Wirkungsgrad mit der Synchronmaschine abgedeckt werden. Für höhere Leistungsanforderungen bei höheren Drehzahlbereichen kann dann die Asynchronmaschine variabel hinzu geschaltet werden. Diese dient dann zur Unterstützung der Synchronmaschine.

Eine vorteilhafte Variante kann in einer Kombination einer gesteuerten und damit kostengünstigen Elektromaschine mit einer geregelten Elektromaschine bestehen. Dies kann dann bspw. eine Asynchronmaschine sein. Auf diese Weise kann eine günstige Kombination einer gesteuerten Maschine mit einer geregelten Maschine realisiert werden. Die Feinjustage der gewünschten Drehzahl kann vorzugsweise mit der geregelten Maschine erreicht werden.

Als Zwischengetriebe eignet sich insbesondere ein bekanntes Differenzialgetriebe, wie es bspw. im Fahrzeugbau eingesetzt wird. Ein Differenzialgetriebe eignet sich insbesondere für einen symmetrischen Aufbau mit zwei gleichartigen Elektromaschinen. Ebenso kann jedoch auch ein Planetengetriebe als Zwischengetriebe verwendet werden, das sich insbesondere für einen unsymmetrischen Aufbau mit unterschiedlich dimensionierten Elektromaschinen eignet. Durch Verwendung zweier baugleicher Differenzialgetriebe als Koppelgetriebe für die Elektromaschinen und als Achsdifferenzialgetriebe zum Antrieb der Fahrzeugräder können die Kosten gegenüber einer Verwendung zwei unterschiedlicher Getriebe reduziert werden.

Nachfolgend werden in knapper Form typische Strategien zur Steuerung der erfindungsgemäßen Anordnung bei einer Verwendung als Fahrzeugantrieb skizziert.

Bei einem Teillastbetrieb mit niedriger Geschwindigkeit und einer relativ geringen Drehmomentanforderung ist vorzugsweise nur eine der Elektromaschinen in Betrieb. Deren Antriebsmoment stützt sich an der Freilaufeinrichtung ab, die zwischen der anderen Elektromaschine und dem Zwischengetriebe angeordnet ist und nur eine Drehrichtung zulässt. Die in Betrieb befindliche Elektromaschine kann in einem günstigen Wirkungsgradbereich betrieben werden. Hier zeigt sich ein Vorteil gegenüber einer Anordnung mit nur einer Elektromaschine, welche die Gesamtleistung abdecken müsste. Diese würde bei diesem Betriebsbeispiel bei nur geringer Leistung und damit bei wesentlich schlechterem Wirkungsgrad betrieben werden müssen.

Ein Teillastbetrieb mit einer niedrigen Drehmomentanforderung und einer höheren Drehzahlanforderung kann so lange mit nur einer Elektromaschine abgedeckt werden, bis diese an ihrer Drehzahlgrenze betrieben wird. Bei deren Überschreitung kann variabel die zweite Elektromaschine hinzu geschaltet werden und zunächst mit noch geringerer Leistung betrieben werden. Auch hier ist der resultierende Gesamtwirkungsgrad sehr günstig, da der Wirkungsgrad der Elektromaschine mit der höheren Leistungsabgabe bei der Berechnung des Gesamtwirkungsgrades deutlich dominiert. Diese Elektromaschine wird in einem günstigen Wirkungsgradbereich betrieben, während die mit Teillast laufende, hinzu geschaltete Maschine problemlos in einem ungünstigeren Wirkungsgradbereich laufen kann. Durch eine Erhöhung der Leistungsabgabe auch der hinzu geschalteten Maschine gelangt diese zunehmend in günstigere Wirkungsgradbereiche, so dass hierbei wieder beide Elektromaschinen nahe ihres optimalen Betriebspunktes betrieben werden können.

Wird ein hohes Drehmoment bei niedrigen Drehzahlen benötigt, bspw. zur Beschleunigung des Fahrzeugs, so wird vorzugsweise wiederum nur eine Elektromaschine angetrieben, während die andere abgeschaltet bleibt. Das Moment der angetriebenen Maschine kann in diesem Fall wie im zuvor beschriebenen Teillastfall über die Freilaufeinrichtung an der ersten Maschine abgestützt werden. Der Gesamtwirkungsgrad ist auch bei diesem Betriebsmodus relativ günstig.

Ein Rekuperationsbetrieb ist dadurch gekennzeichnet, dass die Elektromaschinen als Generatoren betrieben werden. Hierbei wird Bremsenergie in elektrische Energie gewandelt, die in Akkumulatoren gespeichert werden kann. Bei einem typischen Ausgangsfall mit niedrigen Geschwindigkeiten wird eine der Elektromaschinen im Generatorbetrieb über das Zwischengetriebe angetrieben. Die aus der Bremsenergie gewonnene Energie kann durch das entstehende Ungleichgewicht der Drehmomente zunächst zur Beschleunigung der zweiten Maschine verwendet werden, um diese in einen Betriebspunkt mit günstigem Wirkungsgrad zu bringen. Anschließend kann der Zustand durch Aufschaltung eines Moments in dieser Elektromaschine stabilisiert werden. Beide Elektromaschinen laufen anschließend in symmetrischem Betrieb als Generator und rekuperieren jeweils eine ungefähr gleiche Leistung. Der Übergang in den symmetrischen Betriebszustand kann wahlweise auch kontinuierlich erfolgen, um den Komfortansprüchen im Kraftfahrzeug zu genügen.

Ein Rückwärtsfahrbetrieb ist aufgrund seines untergeordneten Anteils am Gesamtbetrieb hinsichtlich seines Wirkungsgrades unproblematisch. Im Normalfall ist hierbei nur eine der Elektromaschinen in Betrieb. Die Drehrichtung ist hierbei lediglich umgekehrt. Die zuvor beschriebene Freilaufeinrichtung ist in diesem Fall nicht in der Lage, eine Abstützung des Drehmoments der angetriebenen Maschine zu ermöglichen. Die jeweils nicht angetriebene Maschine kann jedoch zur aktiven Stabilisierung dieses Betriebspunktes eingesetzt werden. Alternativ kann ein in seiner Sperrrichtung umschaltbarer Freilauf das Moment abstützen.

Ein Verfahren zur Wandlung von elektrischer in mechanische Energie und umgekehrt zum Antrieb eines Fahrzeug wird in Anspruch 19 definiert.

Weitere Merkmale und vorteilhafte Weiterbildungen der Erfindung ergeben sich aus den abhängigen Ansprüchen sowie der nachfolgenden Figurenbeschreibung.

Zeichnungen

Die Erfindung wird nachfolgend anhand eines bevorzugten Ausführungsbeispiels unter Bezugnahme auf die beiliegenden Zeichnungen näher erläutert. Dabei zeigen:

Figur 1                ein Prinzipschaltbild einer erfindungsgemäßen Antriebsanordnung,

Figuren 2 bis 9     verschiedene Betriebsmodi und zugehörige Kennfelder der erfindungsgemäßen Antriebsanordnung,

Figur 10a           eine herkömmliche Antriebsanordnung und

Figur 10b           ein beispielhaftes Betriebskennfeld der Antriebsanordnung entsprechend Figur 10a.

Beschreibung der Ausführungsbeispiele

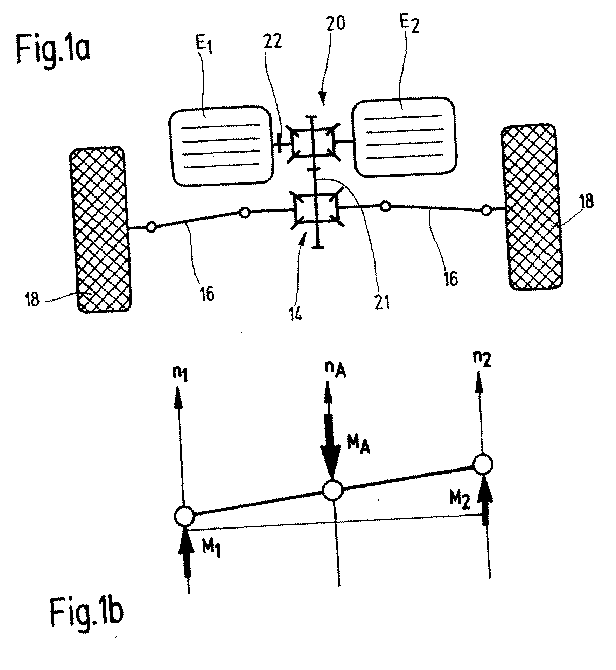

Figur 1a zeigt das grundsätzliche Prinzip einer erfindungsgemäßen Antriebsanordnung mit wenigstens zwei Elektromaschinen $E_1$ und $E_2$, die über ein Zwischengetriebe 20 mit einem Differenzialgetriebe 14 gekoppelt sind. Das Zwischengetriebe 20 weist eine Abtriebswelle 21 zum Antrieb des Differenzialgetriebes 14 auf. Das Differenzialgetriebe 14 ist mit zwei Antriebswellen 16 gekoppelt, die zum Antrieb von Rädern 18 eines Fahrzeugs (nicht dargestellt) dienen. Zumindest eine der beiden Elektromaschinen $E_1$ und $E_2$ weist eine Freilaufeinrichtung 22 auf, die wahlweise entsperrbar und/oder in ihrer Sperrrichtung umkehrbar sein kann. Als Zwischengetriebe 20 eignet sich insbesondere ein Differenzialgetriebe, das ggf. baugleich mit dem Differenzialgetriebe 14 zum Antrieb der Räder 18 sein kann. Das Zwischengetriebe 20 kann alternativ auch ein Planetengetriebe o. dgl. sein, so dass Motoren gleicher oder unterschiedlicher Größe und Leistung problemlos miteinander gekoppelt sein können.

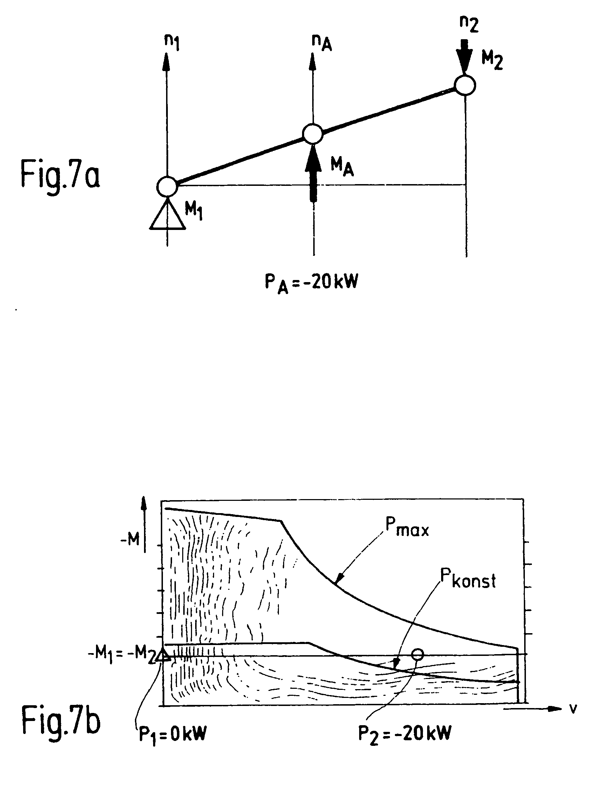

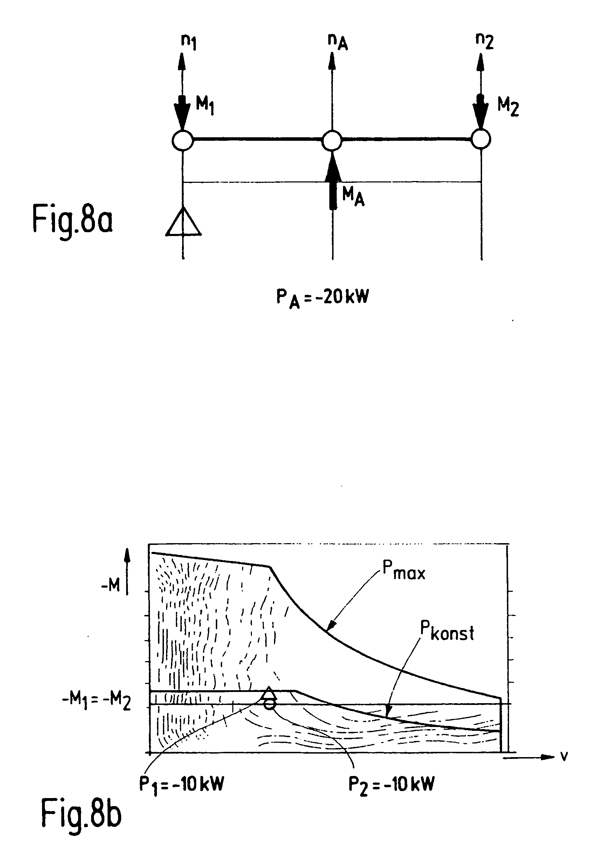

Die erfindungsgemäße Antriebsanordnung eignet sich sowohl zum Antrieb als auch zur Energiegewinnung. Hierbei arbeiten die Elektromaschinen in einem Generatorbetrieb (vgl. Figuren 7 und 8). Die beiden Elektromaschinen $E_1$ und $E_2$ sind vorzugsweise jeweils mit einem Energieversorgungs- und/oder Energiespeichersystem (nicht dargestellt) gekoppelt, das zur Lieferung der elektrischen Antriebsenergie und/oder zur Speicherung von elektrischer Energie dient, sobald die Elektromaschinen in einem Rekuperationsbetrieb laufen und als Generatoren betrieben werden. Als Energiespeicher eignen sich bspw. an sich bekannte Akkumulatoren. Als Energieversorgungssystem eignet sich insbesondere auch ein Brennstoffzellensystem.

Figur 1b verdeutlicht die funktionalen Zusammenhänge der Antriebsanordnung gemäß Figur 1a. Beide Elektromaschinen $E_1$ und $E_2$ können jeweils mit unterschiedlichen Drehzahlen $n_1$ und $n_2$ betrieben werden. Die Ausgangsdrehzahl $n_A$ am Differenzialgetriebe 20 errechnet sich bei einem symmetrischen Differenzialgetriebe aus dem Durchschnitt beider Einzeldrehzahlen:

$$n_A \;=\; \frac{n_1 \;+\; n_2}{2}.$$

Die Längen der Pfeile für die Drehzahlen $n_1$, $n_2$ und $n_A$ charakterisieren jeweils deren Werte. Eine Addition lässt sich somit auch auf grafischem Wege anhand der Darstellung der Figur 1b durchführen.

Das Ausgangsdrehmoment $M_A$ errechnet sich aus einer Addition der Einzelmomente $M_1$ und $M_2$ der beiden Elektromaschinen $E_1$ bzw. $E_2$. Diese Berechnung erfolgt unter der idealisierten Annahme, dass im Getriebe selbst keine Verluste entstehen. Es soll im folgenden zur Vereinfachung angenommen werden, dass zwei gleichartige Elektromaschinen $E_1$ und $E_2$ j e-weils ein gleiches Drehmoment $M_E$ liefern, so dass sich das Ausgangsdrehmoment $M_A$ am Zwischengetriebe 20 zu

$$M_A \;=\; M_1 \;+\; M_2 \;=\; 2 \bullet M_E$$

errechnet. Die gleich langen Pfeile für die Einzelmomente $M_1$ und $M_2$ verdeutlicht deren gleichen Wert. Das Ausgangsmoment $M_A$ lässt sich somit auch durch grafische Addition ermitteln.

Die Ausgangsleistung $P_A$ ist jeweils ein Produkt aus dem Ausgangsdrehmoment $M_A$ und der Ausgangsdrehzahl $n_A$, so dass gilt:

$$P_A \;=\; M_A \bullet n_A \;=\; 2 \bullet M_E \bullet (n_1 \;+\; n_2) \;/\; 2$$

$$=\; M_1 \bullet n_1 \;+\; M_2 \bullet n_2$$

$$=\; P_1 \;+\; P_2,$$

d.h., die Ausgangsleistung $P_A$ entspricht einer Summe der Einzelleistungen $P_1$ und $P_2$ der miteinander gekoppelten Elektromaschinen $E_1$ und $E_2$.

Ein Gesamtwirkungsgrad $\eta$ der Anordnung lässt sich mit folgender Gleichung herleiten:

$$1/\eta \;=\; P_1/P_A \bullet 1/\eta_1 \;+\; P_2/P_A \bullet 1/\eta_2.$$

Die erfindungsgemäße Anordnung mit zwei variabel ansteuerbaren Elektromaschinen $E_1$ und $E_2$, die über ein Zwischengetriebe 20, insbesondere ein Differenzialgetriebe miteinander gekoppelt sind, ermöglicht eine Wirkungsgradoptimierung des Antriebs, da die Elektromaschinen in günstigen Betriebspunkten arbeiten können. Der Nachteil von zusätzlich entstehenden Verlusten aufgrund der mechanischen Reibung im Zwischengetriebe 20 wird durch die erzielbaren Wirkungsgradverbesserungen mehr als ausgeglichen. Möglich ist bspw. die Koppelung einer Synchronmaschine mit einer Asynchronmaschine. Eine Synchronmaschine hat in niedrigen Drehzahlbereichen deutlich bessere Wirkungsgrade als eine Asynchronmaschine in vergleichbaren Betriebsbereichen. Der Teillastbereich mit niedrigen Geschwindigkeiten lässt sich auf diese Weise durch bevorzugten Einsatz der Synchronmaschine abdecken, während für höhere Leistungen und Geschwindigkeiten die Asynchronmaschine unterstützend hinzu geschaltet werden kann. Eine sehr kostengünstige Variante kann bspw. im Einsatz einer gesteuerten Synchronmaschine und einer geregelten Asynchronmaschine bestehen.

Die folgenden Ausführungsbeispiele zeigen unterschiedliche Betriebsmodi der miteinander gekoppelten Elektromaschinen $E_1$ und $E_2$. Der Einfachheit halber wird im Folgenden davon ausgegangen, dass zwei gleichartige Elektromaschinen gleicher Größe und Leistung eingesetzt werden, die somit jeweils gleiche Kennfelder aufweisen. Noch bessere Wirkungsgrade lassen sich allerdings mit einer optimierten Abstimmung zweier unterschiedlicher Elektromaschinen erzielen.

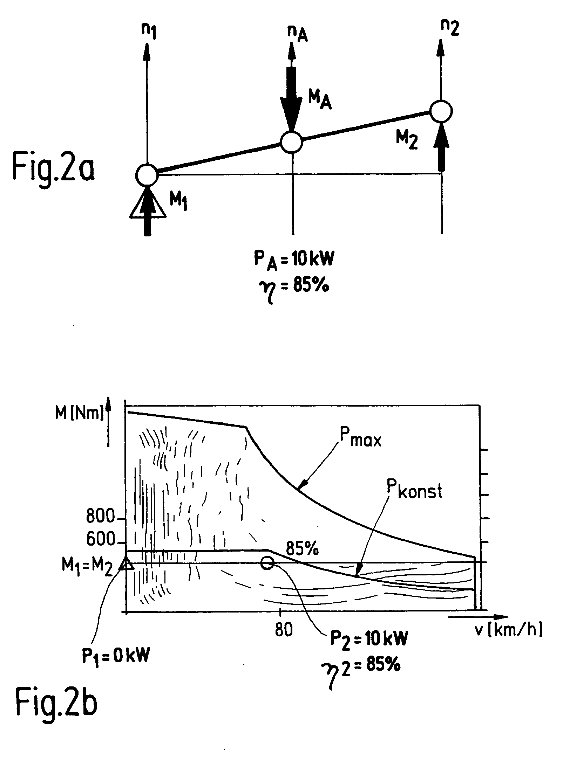

Die Figuren 2a und 2b verdeutlichen einen Betrieb der Antriebsanordnung bei Teillast ($M_A$ < 500 Nm) und bei niedrigen Geschwindigkeiten (V < 50 km/h), bei der die erste Elektromaschine $E_1$ abgeschaltet ist und somit keine Leistung liefert ($n_1$ = 0; $P_1$ = 0 kW). Die gesamte Ausgangsleistung von bspw. $P_A$ = 10 kW wird hierbei von der zweiten Elektromaschine $E_2$ geliefert ($P_2$ = 10 kW). Wie anhand des Betriebskennfeldes der Figur 2b verdeutlicht wird, befindet sich die zweite Elektromaschine $E_2$ in einem Bereich des Wirkungsgrades von ca. 85 % ($\eta_2$ = 85 %), der somit auch dem Gesamtwirkungsgrad entspricht ($\eta$ = 85 %). Zusätzliche Verluste im Zwischengetriebe 20 werden dabei vernachlässigt.

Das Drehmoment $M_2$ der zweiten Elektromaschine $E_2$ stützt sich über das Zwischengetriebe 20 am Freilauf 22 ab, der zwischen der ersten Elektromaschine $E_1$ und dem Zwischengetriebe 20 angeordnet ist (vgl. Figur 1a). Der Freilauf 22 verhindert somit ein Rückwärtsdrehen der ersten Elektromaschine $E_1$.

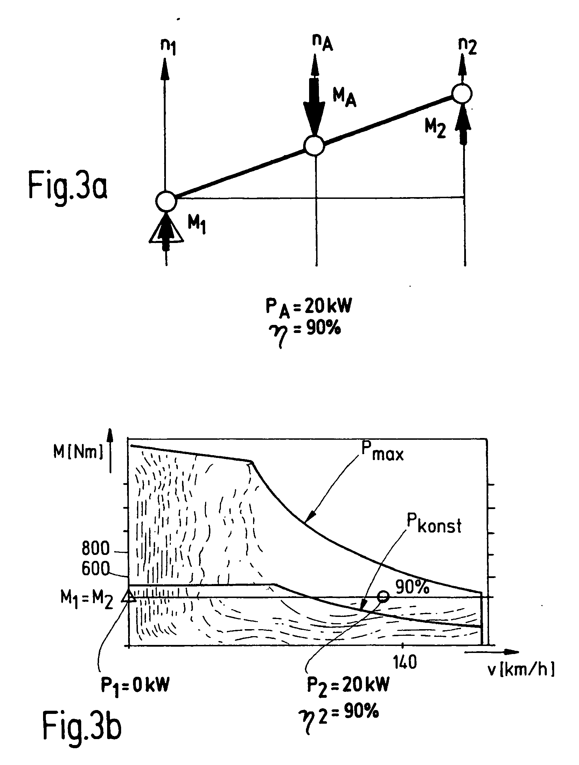

Die Figuren 3a und 3b verdeutlichen einen Betrieb der Antriebsanordnung bei Teillast ($M_A$ < 500 Nm) und bei höheren Geschwindigkeiten (V < 80 km/h), bei der die erste Elektromaschine $E_1$ wiederum abgeschaltet ist und somit keine Leistung liefert ($n_1$ = 0; $P_1$ = 0 kW). Die gesamte Ausgangsleistung von bspw. $P_A$ = 20 kW wird somit von der zweiten Elektromaschine $E_2$ geliefert ($P_2$ = 20 kW). Wie anhand des Betriebskennfeldes der Figur 3b verdeutlicht wird, befindet sich die zweite Elektromaschine $E_2$ in einem Bereich des Wirkungsgrades von ca. 90 % ($\eta_2$ = 90 %), der somit auch dem Gesamtwirkungsgrad entspricht ($\eta$ = 90 %). Zusätzliche Verluste im Zwischengetriebe 20 sind auch hierbei vernachlässigt. Der Freilauf 22 zur Momentenabstützung verhindert wiederum das Rückwärtsdrehen der ersten Elektromaschine $E_1$.

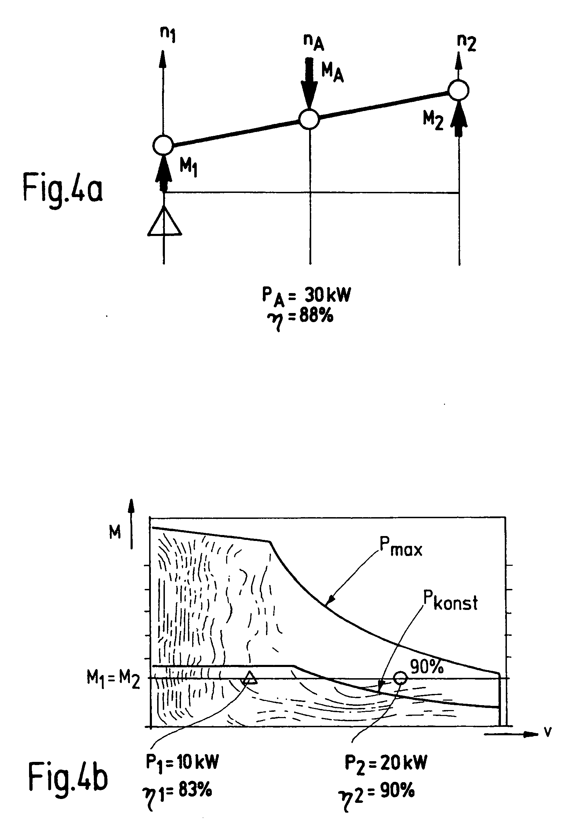

Die Figuren 4a und 4b verdeutlichen einen anderen Betriebpunkt der Antriebsanordnung bei Teillast ($M_A$ < 500 Nm) und höheren Geschwindigkeiten (v > 80 km/h), bei der die zweite Elektromaschine $E_2$ an ihrer Leistungsgrenze betrieben wird ($P_2$ = 20 kW). Da jedoch eine höhere Ausgangsleistung von bspw. $P_A$ = 30 kW benötigt wird, wird die erste Elektromaschine E1 mit einer mittleren Leistung ($P_1$ = 10 kW) hinzu geschaltet.

Wie anhand des Betriebskennfeldes der Figur 4b verdeutlicht wird, befindet sich die zweite Elektromaschine $E_2$ in einem Bereich des Wirkungsgrades von weiterhin ca. 90 % ($\eta_2$ = 90 %), während die erste Elektromaschine $E_1$ einen Wirkungsgrad von 83 % liefert ($\eta_1$ = 83 %). Der Gesamtwirkungsgrad errechnet sich hieraus zu ca. 88 % ($\eta$ = 88 %). Es wird deutlich, dass der Wirkungsgrad der Elektromaschine mit der höheren Leistungsabgabe in der Berechnung des Gesamtwirkungsgrades dominiert. Zusätzliche Verluste im Zwischengetriebe 20 sind auch hierbei vernachlässigt.

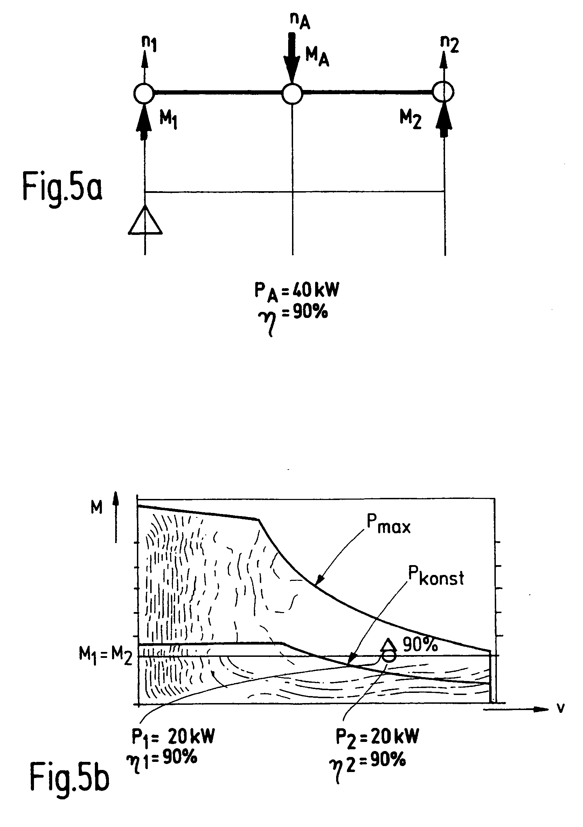

Die Figuren 5a und 5b verdeutlichen einen Betriebpunkt der Antriebsanordnung bei Teillast ($M_A$ < 500 Nm) und hohen Geschwindigkeiten (v > 120 km/h), bei der beide Elektromaschinen $E_1$ und $E_2$ an ihrer Leistungsgrenze bzw. in ihrem optimalen Betriebspunkt betrieben werden ($P_1$ = $P_2$ = 20 kW). Die Ausgangsleistung von bspw. $P_A$ = 40 kW entspricht der Summe der Einzelleistungen $P_1$ und $P_2$.

Wie anhand des Betriebskennfeldes der Figur 5b verdeutlicht wird, befinden sich beide Elektromaschinen $E_1$ und $E_2$ in ihrem optimalen Betriebspunkt ($\eta_1$ = $\eta_2$ = 90 %), so dass auch der Gesamtwirkungsgrad den gleichen Wert erreicht ($\eta$ = 90 %). Zusätzliche Verluste im Zwischengetriebe 20 sind auch hierbei vernachlässigt.

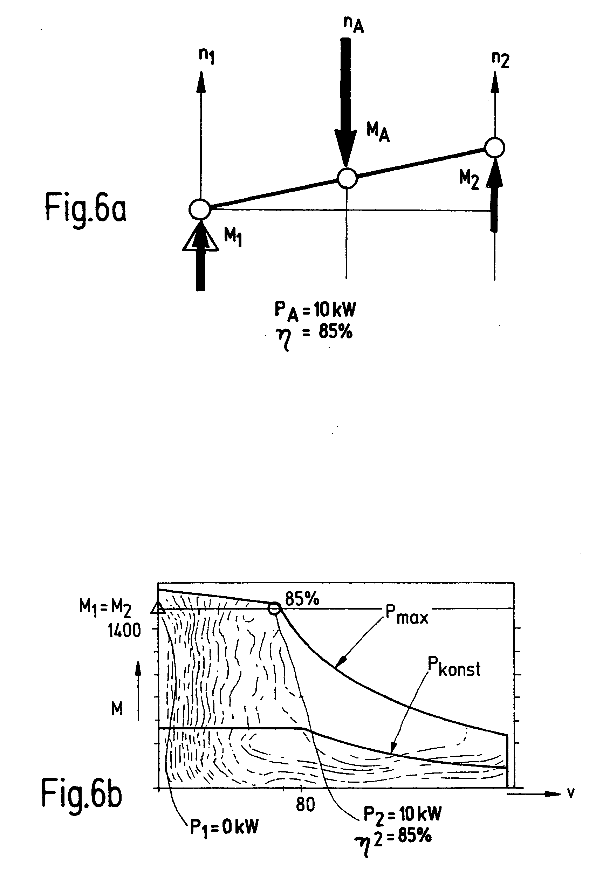

Die Figuren 6a und 6b verdeutlichen einen Betrieb der Antriebsanordnung bei Volllast mit hohem Drehmomentbedarf ($M_A$ > 1400 Nm) und niedriger Geschwindigkeiten (V < 50 km/h), bei der die erste Elektromaschine $E_1$ abgeschaltet ist und somit keine Leistung liefert ($n_1$ = 0; $P_1$ = 0 kW). Die gesamte Ausgangsleistung von bspw. $P_A$ = 10 kW wird somit von der zweiten Elektromaschine $E_2$ geliefert ($P_2$ = 10 kW). Diese gibt auch das maximal mögliche Drehmoment $M_2$ = $M_{max}$ ab.

Wie anhand des Betriebskennfeldes der Figur 6b verdeutlicht wird, befindet sich die zweite Elektromaschine $E_2$ in einem Bereich des Wirkungsgrades von ca. 85 % ($\eta_2$ = 85 %), der somit auch dem Gesamtwirkungsgrad entspricht ($\eta$ = 85 %). Zusätzliche Verluste im Zwischengetriebe 20 sind auch hierbei vernachlässigt. Der Freilauf 22 zur Momentenabstützung verhindert wiederum das Rückwärtsdrehen der ersten Elektromaschine $E_1$.

Die Figuren 7 und 8 verdeutlichen einen Generatorbetrieb der Antriebsanordnung, bei der bspw. eine zum Bremsen des Fahrzeugs notwendige Bremsenergie zum Antrieb der Elektromaschinen genutzt werden kann. Diese können während dieses sog. Rekuperationsbetriebs die dabei erzeugte elektrische Energie zur Zwischenspeicherung an Akkumulatoren (nicht dargestellt) liefern, so dass der Gesamtwirkungsgrad des Antriebs verbessert und möglichst wenig Bremsenergie in einer herkömmlichen Betriebsbremse in Reibungswärme umgewandelt wird.

Die Figuren 7a und 7b zeigen als Ausgangssituation einen Teillastfall ($M_A$ < -500 Nm) bei niedriger Geschwindigkeit (v < 50 km/h). Hierbei wird zunächst die gewonnene Energie ($P_A$ = -20 kW) durch das entstehende Momentenungleichgewicht zur Beschleunigung der ersten Elektromaschine $E_1$ genutzt, um diese in einen Bereich mit günstigem Wirkungsgrad zu bringen. Sobald dies der Fall ist, wird der Zustand durch Aufschaltung eines Moments $-M_1$ der ersten Elektromaschine $E_1$ stabilisiert. Beide Elektromaschinen $E_1$ und $E_2$ rekuperieren dann symmetrisch je 10 kW ($P_1 = P_2$ = 10 kW), so dass sich wiederum eine Ausgangsbremsleistung von $P_A$ = -20 kW ergibt. Dieser symmetrische Betrieb ist anhand der Figuren 8a und 8b verdeutlicht. Vorzugsweise kann die Aufschaltung eines Bremsmoments kontinuierlich erfolgen, um keinen Drehmomentsprung zu erzeugen, der aus Komfortgründen unerwünscht ist.

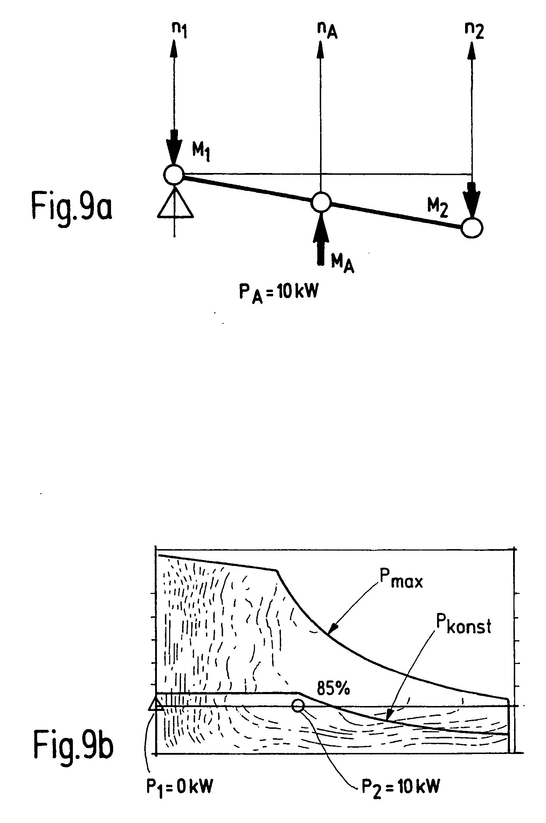

Die Figuren 9a und 9b zeigen schließlich einen Rückwärtsbetrieb mit einer benötigten Ausgangsleistungen von bspw. $P_A$ = 10 kW. Im Normalfall wird hierbei lediglich eine Elektromaschine benötigt, da keine hohen Leistungen oder Drehmomente notwendig sind. Im gezeigten Beispiel wird der Rückwärtsbetrieb durch einen Antrieb der zweiten Elektromaschine $E_2$ ($P_2$ = 10 kW) bei gleichzeitigem Stillstand der ersten Elektromaschine $E_1$ ($P_1$ = 0 kW) ermöglicht.

Durch die Umkehrung der Fahrtrichtung kann ein herkömmlicher Freilauf diesen Modus nicht unterstützen. Der Rückwärtsbetrieb kann bspw. dadurch erreicht werden, dass die erste Elektromaschine $E_1$ den Betriebspunkt der zweiten Elektromaschine $E_2$ aktiv stabilisiert. Der daraus resultierende ungünstige Antriebswirkungsgrad ist jedoch aufgrund des relativ selten benötigten Rückwärtsbetriebs für den Gesamtwirkungsgrad des Antriebs nicht relevant.

Eine Alternative besteht in der Verwendung eines in seiner Drehrichtung umschaltbaren Freilaufs 22, der für eine Blockierung der jeweils nicht angetriebenen Elektromaschine sorgen kann.

## Patentansprüche

1. Anordnung zur Wandlung von elektrischer in mechanische Energie und umgekehrt zum Antrieb eines Fahrzeugs und/oder zur Energierückgewinnung bei dessen Abbremsung, mit wenigstens zwei Elektromaschinen ($E_1$, $E_2$), die über ein, mit einer Abtriebswelle (21) gekoppeltes Zwischengetriebe (20) miteinander gekoppelt sind, und mit einer Steuerungseinrichtung zur variablen Steuerung der Elektromaschinen ($E_1$, $E_2$) in Abhängigkeit einer Drehzahlanforderung ($n_A$) und/oder einer Drehmomentanforderung ($M_A$) an der Abtriebswelle (21). , **dadurch gekennzeichnet, dass** die Steuerungseinrichtung so ausgestaltet ist, dass sie die Steuerung und /oder Regelung der Elektromaschinen ($E_1$, $E_2$) wirkungsgradoptimiert ermöglicht, wobei bei einem Teillastbetrieb mit einer niedrigen Drehzahl- ($n_A$) und Drehmomentanforderung ($M_A$) eine der Elektromaschinen ($E_2$) die gesamte Ausgangsleistung lietert, während die nicht angetriebene Elektromaschine ($E_1$) mittels einer Freilaufeinrichtung (22) blockierbar ist.

2. Anordnung nach Anspruch 1, **dadurch gekennzeichnet, dass** zwischen wenigstens einer der Elektromaschinen ($E_1$, $E_2$) und dem Zwischengetriebe (20) eine Freilaufeinrichtung (22) vorgesehen ist.

3. Anordnung nach Anspruch 2, **dadurch gekennzeichnet, dass** die Freilaufeinrichtung (22) entsperrbar und/oder in ihrer Sperrrichtung umschaltbar ist.

4. Anordnung nach einem der Ansprüche 1 bis 3, **dadurch gekennzeichnet, dass** die Anordnung zwei Elektromaschinen ($E_1$, $E_2$) ungefähr gleicher Leistung aufweist.

5. Anordnung nach einem der Ansprüche 1 bis 3, **dadurch gekennzeichnet, dass** zumindest eine der Elektromaschinen ($E_1$) eine Synchronmaschine ist, und dass zumindest eine weitere Elektromaschine ($E_2$) eine Asynchronmaschine ist.

6. Anordnung nach Anspruch 5, **dadurch gekennzeichnet, dass** die Synchronmaschine variabel steuerbar und/oder regelbar ist.

7. Anordnung nach Anspruch 5 oder 6, **dadurch gekennzeichnet, dass** die Asynchronmaschine variabel steuerbar und/oder regelbar ist.

8. Anordnung nach einem der Ansprüche 1 bis 7, **dadurch gekennzeichnet, dass** das Zwischengetriebe (20) ein Differenzialgetriebe ist.

9. Anordnung nach einem der Ansprüche 1 bis 7, **dadurch gekennzeichnet, dass** das Zwischengetriebe (20) ein Planetengetriebe ist.

10. Anordnung nach einem der Ansprüche 1 bis 9, **dadurch gekennzeichnet, dass** bei einem Teillastbetrieb mit einer niedrigen Drehmomentanforderung ($M_A$) und einer höheren Drehzahlanforderung ($n_A$) beide Elektromaschinen ($E_1$, $E_2$) angetreibbar sind, wobei die mit niederer Drehzahl ($n_1$) betriebene Elektromaschine ($E_1$) eine Momentenabstützung mittels der Freilaufeinrichtung (22) gegen das von der jeweils anderen Elektromaschine ($E_2$) gelieferte Drehmoment ($M_2$) erfährt, wenn die Drehzahl der Elektromaschine ($E_1$) kleiner Null würde.

11. Anordnung nach einem der Ansprüche 1 bis 10, **dadurch gekennzeichnet, dass** bei einem Volllastbetrieb mit einer hohen Drehmomentanforderung ($M_A$) und einer niedrigen Drehzahlanforderung ($n_A$) eine der Elektromaschinen ($E_2$) angetreibbar ist, während die nicht angetriebene Elektromaschine ($E_1$) mittels einer Freilaufeinrichtung (22) blockiert ist.

12. Anordnung nach einem der Ansprüche 1 bis 11, **dadurch gekennzeichnet, dass** bei einem Rekuperationsbetrieb zumindest eine der Elektromaschinen ($E_1$, $E_2$) als Generator betreibbar ist.

13. Anordnung nach Anspruch 12, **dadurch gekennzeichnet, dass** bei einer negativen Momentenanforderung ($-M_A$) an der Abtriebswelle (21) eine der Elektromaschinen ($E_2$) als Generator betreibbar ist.

14. Anordnung nach Anspruch 12 oder 13, **dadurch gekennzeichnet, dass** bei einer negativen Momentenanforderung ($-M_A$) an der Abtriebswelle (21) beide Elektromaschinen ($E_1$, $E_2$) als Generator betreibbar sind.

15. Anordnung nach einem der Ansprüche 12 bis 14, **dadurch gekennzeichnet, dass** bei einer negativen Momentenanforderung ($-M_A$) an der Abtriebswelle (21) zunächst nur eine der Elektromaschinen ($E_2$) als Generator betreibbar ist, und dass nach der Beschleunigung der anderen Elektromaschine ($E_1$) auf eine Betriebsdrehzahl ($n_1$) diese als Generator hinzu schaltbar ist.

16. Anordnung nach einem der Ansprüche 1 bis 15, **dadurch gekennzeichnet, dass** zumindest eine der Elektromaschinen ($E_1$, $E_2$) in ihrer Drehrichtung umkehrbar ist.

17. Anordnung nach einem der Ansprüche 1 bis 16, **dadurch gekennzeichnet, dass** bei einer Umkehrung der Drehrichtung einer der Elektromaschinen ($E_2$) die jeweils andere Elektromaschine ($E_1$) zur Momentenabstützung als Generator betreibbar ist.

18. Anordnung nach einem der Ansprüche 1 bis 17, **dadurch gekennzeichnet, dass** die Freilaufeinrichtung (22) zur Momentenabstützung bei einer Drehrichtungsumkehr einer der Elektromaschinen ($E_2$) in ihrer Sperrrichtung umschaltbar ist.

19. Verfahren zur Wandlung von elektrischer in mechanische Energie und umgekehrt zum Antrieb eines Fahrzeugs und/oder zur Energierückgewinnung bei dessen Abbremsung, bei dem wenigstens zwei, über ein Zwischengetriebe (20) miteinander gekoppelte Elektromaschinen ($E_1$, $E_2$) eine Abtriebswelle (21) antreiben bzw. von dieser angetrieben werden, wobei die Elektromaschinen ($E_1$, $E_2$) in Abhängigkeit einer Drehzahl- ($n_A$) und/oder Drehmomentanforderung ($M_A$) an der Abtriebswelle (21) variabel gesteuert und/oder geregelt werden, **dadurch gekennzeichnet, dass** die Steuerung und /oder Regelung der Elektromaschinen ($E_1$, $E_2$) wirkungsgradoptimiert erfolgt und bei einem Teillastbetrieb mit einer niedrigen Drehzahl- ($n_A$) und Drehmomentanforderung ($M_A$) eine der Elektromaschinen ($E_2$) die gesamte Ausgangsleistung lietert, während die nicht angetriebene Elektromaschine ($E_1$) mittels einer Freilaufeinrichtung (22) blockiert wird.

20. Verfahren nach Anspruch 19, **dadurch gekennzeichnet, dass** eine Ausgangsdrehzahl ($n_A$) der Abtriebswelle (21) einem Durchschnitt der einzelnen Drehzahlen ($n_1$, $n_2$) der Elektromaschinen ($E_1$, $E_2$) entspricht.

21. Verfahren nach Anspruch 19 oder 20, **dadurch gekennzeichnet, dass** ein Ausgangsdrehmoment ($M_A$) an der Abtriebswelle (21) einer Summe der von den Elektromaschinen ($E_1$, $E_2$) gelieferten einzelnen Drehmomente ($M_1$, $M_2$) entspricht.

22. Verfahren nach einem der Ansprüche 19 bis 21, **dadurch gekennzeichnet, dass** eine Ausgangsleistung ($P_A$) an der Abtriebswelle (21) einer Summe der von den Elektromaschinen ($E_1$, $E_2$) gelieferten einzelnen Leistungen ($P_1$, $P_2$) entspricht.

23. Verfahren nach einem der Ansprüche 19 bis 22, **dadurch gekennzeichnet, dass** bei einem Teillastbetrieb mit einer niedrigen Drehmomentanforderung ($M_A$) und einer höheren Drehzahlanforderung ($n_A$) beide Elektromaschinen ($E_1$, $E_2$) angetrieben werden, wobei die mit niederer Drehzahl ($n_1$) betriebene Elektromaschine ($E_1$) eine Momentenabstützung mittels der Freilaufeinrichtung (22) gegen das von der jeweils anderen Elektromaschine ($E_2$) gelieferte Drehmoment ($M_2$) erfahren kann.

24. Verfahren nach einem der Ansprüche 19 bis 23, **dadurch gekennzeichnet, dass** bei einem Volllastbetrieb mit einer hohen Drehmomentanforderung ($M_A$) und einer niedrigen Drehzahlanforderung ($n_A$) nur eine der Elektromaschinen ($E_2$) angetrieben wird, während die nicht angetriebene Elektromaschine ($E_1$) mittels einer Freilaufeinrichtung (22) blokkiert wird.

25. Verfahren nach einem der Ansprüche 19 bis 24, **dadurch gekennzeichnet, dass** bei einem Rekuperationsbetrieb zumindest eine der Elektromaschinen ($E_1$, $E_2$) als Generator betrieben wird.

26. Verfahren nach Anspruch 25, **dadurch gekennzeichnet, dass** bei einer negativen Momentenanforderung (-$M_A$) an der Abtriebswelle (21) nur eine der Elektromaschinen ($E_2$) als Generator betrieben wird.

27. Verfahren nach Anspruch 25 oder 26, **dadurch gekennzeichnet, dass** bei einer negativen Momentenanforderung (-$M_A$) an der Abtriebswelle (21) beide Elektromaschinen ($E_1$, $E_2$) als Generator betrieben werden.

28. Verfahren nach einem der Ansprüche 25 bis 27, **dadurch gekennzeichnet, dass** bei einer negativen Momentenanforderung (-$M_A$) an der Abtriebswelle (21) zunächst nur eine der Elektromaschinen ($E_2$) als Generator betrieben wird, und dass nach der Beschleunigung der anderen Elektromaschine ($E_1$) auf eine Betriebsdrehzahl ($n_1$) diese als Generator hinzu geschaltet wird.

29. Verfahren nach einem der Ansprüche 19 bis 28, **dadurch gekennzeichnet, dass** zumindest eine der Elektromaschinen ($E_1$, $E_2$) in ihrer Drehrichtung umkehrbar ist.

30. Verfahren nach einem der Ansprüche 19 bis 29, **dadurch gekennzeichnet, dass** bei einer Umkehrung der Drehrichtung einer der Elektromaschinen ($E_2$) die jeweils andere Elektromaschine ($E_1$) zur Momentenabstützung als Generator betrieben wird.

31. Verfahren nach einem der Ansprüche 19 bis 29, **dadurch gekennzeichnet, dass** die Freilaufeinrichtung (22) zur Momentenabstützung bei einer Drehrichtungsumkehr einer der Elektromaschinen ($E_2$) in ihrer Sperrrichtung umgeschaltet wird.

**Claims**

1. Arrangement for converting electrical energy into mechanical energy, and vice versa, for the purpose of driving a vehicle and/or for the purpose of recovering energy when the said vehicle is braked, having at least two electrical machines ($E_1$, $E_2$) which are coupled to one another by means of an intermediate gear mechanism (20) which is coupled to an output shaft (21), and having a control device for controlling the electrical machines ($E_1$, $E_2$) in a variable manner as a function of a rotation-speed requirement ($n_A$) and/or a torque requirement ($M_A$) at the output shaft (21), **characterized in that** the control device is designed such that it allows the electrical machines ($E_1$, $E_2$) to be controlled and/or regulated in an efficiency-optimized manner, with one of the electrical machines ($E_2$) delivering all the output power, while the non-driven electrical machine ($E_1$) can be blocked by means of a freewheeling device (22), in the case of partial-load operation with a low rotation-speed ($n_A$) and torque requirement ($M_A$).

2. Arrangement according to Claim 1, **characterized in that** a freewheeling device (22) is provided between at least one of the electrical machines ($E_1$, $E_2$) and the intermediate gear mechanism (20).

3. Arrangement according to Claim 2, **characterized in that** the freewheeling device (22) can be unblocked and/or the blocking direction of the said freewheeling device can be changed over.

4. Arrangement according to one of Claims 1 to 3, **characterized in that** the arrangement has two electrical machines ($E_1$, $E_2$) of approximately the same power.

5. Arrangement according to one of Claims 1 to 3, **characterized in that** at least one of the electrical machines ($E_1$)

is a synchronous machine, and **in that** at least one further electrical machine ($E_2$) is an asynchronous machine.

6. Arrangement according to Claim 5, **characterized in that** the synchronous machine can be controlled and/or regulated in a variable manner.

7. Arrangement according to Claim 5 or 6, **characterized in that** the asynchronous machine can be controlled and/or regulated in a variable manner.

8. Arrangement according to one of Claims 1 to 7, **characterized in that** the intermediate gear mechanism (20) is a differential gear mechanism.

9. Arrangement according to one of Claims 1 to 7, **characterized in that** the intermediate gear mechanism (20) is a planetary gear mechanism.

10. Arrangement according to one of Claims 1 to 9, **characterized in that** both electrical machines ($E_1$, $E_2$) can be driven in the case of partial-load operation with a low torque requirement ($M_A$) and a relatively high rotation-speed requirement ($n_A$), with the electrical machine ($E_1$) which is operated at a low rotation speed ($n_1$) being provided with torque assistance by means of the freewheeling device (22) by the torque ($M_2$) which is delivered by the respectively other electrical machine ($E_2$) if the rotation speed of the electrical machine ($E_1$) were to fall lower than zero.

11. Arrangement according to one of Claims 1 to 10, **characterized in that** one of the electrical machines ($E_2$) can be driven, while the non-driven electrical machine ($E_1$) is blocked by means of a freewheeling device (22), in the case of full-load operation with a high torque requirement ($M_A$) and a low rotation-speed requirement ($n_A$) .

12. Arrangement according to one of Claims 1 to 11, **characterized in that** at least one of the electrical machines ($E_1$, $E_2$) can be operated as a generator in the case of recuperation operation.

13. Arrangement according to Claim 12, **characterized in that** one of the electrical machines ($E_2$) can be operated as a generator in the case of a negative torque requirement ($-M_A$) at the output shaft (21).

14. Arrangement according to Claim 12 or 13, **characterized in that** both electrical machines ($E_1$, $E_2$) can be operated as generators in the case of a negative torque requirement ($-M_A$) at the output shaft (21).

15. Arrangement according to one of Claims 12 to 14, **characterized in that** initially only one of the electrical machines ($E_2$) can be operated as a generator in the case of a negative torque requirement ($-M_A$) at the output shaft (21), and that after acceleration of the other electrical machine ($E_1$) to an operating rotation speed ($n_1$) , this electrical machine can additionally be connected as a generator.

16. Arrangement according to one of Claims 1 to 15, **characterized in that** the direction of rotation of at least one of the electrical machines ($E_1$, $E_2$) can be reversed.

17. Arrangement according to one of Claims 1 to 16, **characterized in that**, in the case of the direction of rotation of one of the electrical machines ($E_2$) being reversed, the respectively other electrical machine ($E_1$) can be operated as a generator for the purpose of torque assistance.

18. Arrangement according to one of Claims 1 to 17, **characterized in that** the blocking direction of the freewheeling device (22) can be changed over for the purpose of torque assistance in the case of a reversal in the direction of rotation of one of the electrical machines ($E_2$) .

19. Method for converting electrical energy into mechanical energy, and vice versa, for the purpose of driving a vehicle and/or for the purpose of recovering energy when the said vehicle is braked, in which method at least two electrical machines ($E_1$, $E_2$) which are coupled to one another by means of an intermediate gear mechanism (20) drive or are driven by an output shaft (21), with the electrical machines ($E_1$, $E_2$) being controlled and/or regulated in a variable manner as a function of a rotation-speed ($n_A$) and/or torque requirement ($M_A$) at the output shaft (21), **characterized in that** the electrical machines ($E_1$, $E_2$) are controlled and/or regulated in an efficiency-optimized manner and one of the electrical machines ($E_2$) delivers all the output power, while the non-driven electrical machine ($E_1$) is blocked by means of a freewheeling device (22), in the case of partial-load operation with a low rotation-speed ($n_A$) and torque requirement ($M_A$).

**20.** Method according to Claim 19, **characterized in that** an output rotation speed ($n_A$) of the output shaft (21) corresponds to an average of the individual rotation speeds ($n_1$, $n_2$) of the electrical machines ($E_1$, $E_2$).

**21.** Method according to Claim 19 or 20, **characterized in that** an output torque ($M_A$) at the output shaft (21) corresponds to a sum of the individual torques ($M_1$, $M_2$) which are delivered by the electrical machines ($E_1$, $E_2$).

**22.** Method according to one of Claims 19 to 21, **characterized in that** an output power ($P_A$) at the output shaft (21) corresponds to a sum of the individual powers ($P_1$, $P_2$) which are delivered by the electrical machines ($E_1$, $E_2$).

**23.** Method according to one of Claims 19 to 22, **characterized in that** both electrical machines ($E_1$, $E_2$) are driven in the case of partial-load operation with a low torque requirement ($M_A$) and a relatively high rotation-speed requirement ($n_A$), it being possible for the electrical machine ($E_1$) which is operated at a low rotation speed ($n_1$) to be provided with torque assistance by means of the freewheeling device (22) by the torque ($M_2$) which is delivered by the respectively other electrical machine ($E_2$).

**24.** Method according to one of Claims 19 to 23, **characterized in that** only one of the electrical machines ($E_2$) is driven, while the non-driven electrical machine ($E_1$) is blocked by means of a freewheeling device (22), in the case of full-load operation with a high torque requirement ($M_A$) and a low rotation-speed requirement ($n_A$) .

**25.** Method according to one of Claims 19 to 24, **characterized in that** at least one of the electrical machines ($E_1$, $E_2$) is operated as a generator in the case of recuperation operation.

**26.** Method according to Claim 25, **characterized in that** only one of the electrical machines ($E_2$) is operated as a generator in the case of a negative torque requirement (-$M_A$) at the output shaft (21).

**27.** Method according to Claim 25 or 26, **characterized in that** both electrical machines ($E_1$, $E_2$) are operated as generators in the case of a negative torque requirement (-$M_A$) at the output shaft (21).

**28.** Method according to one of Claims 25 to 27, **characterized in that** initially only one of the electrical machines ($E_2$) is operated as a generator in the case of a negative torque requirement (-$M_A$) at the output shaft (21), and **in that** after acceleration of the other electrical machine ($E_1$) to an operating rotation speed ($n_1$), this electrical machine is additionally connected as a generator.

**29.** Method according to one of Claims 19 to 28, **characterized in that** the direction of rotation of at least one of the electrical machines ($E_1$, $E_2$) can be reversed.

**30.** Method according to one of Claims 19 to 29, **characterized in that**, in the case of the direction of rotation of one of the electrical machines ($E_2$) being reversed, the respectively other electrical machine ($E_1$) is operated as a generator for the purpose of torque assistance.

**31.** Method according to one of Claims 19 to 29, **characterized in that** the blocking direction of the freewheeling device (22) can be changed over for the purpose of torque assistance in the case of a reversal in the direction of rotation of one of the electrical machines ($E_2$) .

**Revendications**

**1.** Ensemble de conversion d'énergie électrique en énergie mécanique et inversement, pour l'entraînement d'un véhicule et/ou la récupération d'énergie lors du freinage de ce dernier, l'ensemble présentant
au moins deux machines électriques ($E_1$, $E_2$) qui sont accouplées l'une à l'autre au moyen d'une transmission intermédiaire (20) accouplée à un arbre entraîné (21) et
un dispositif de commande qui commande de manière variable les machines électriques ($E_1$, $E_2$) en fonction de la vitesse de rotation ($n_A$) demandée et/ou du couple de rotation ($M_A$) demandé sur l'arbre entraîné (21), **caractérisé en ce que**
le dispositif de commande est configuré de telle sorte qu'il permet d'optimiser le rendement de la commande et/ou de la régulation des machines électriques ($E_1$, $E_2$) de telle sorte qu'en fonctionnement à charge partielle, lorsque la vitesse de rotation ($n_A$) demandée est basse et lorsque le couple de rotation ($M_A$) demandé est bas, l'une des machines électriques ($E_2$) délivre la totalité de la puissance de sortie pendant que la machine électrique ($E_1$) non

entraînée peut être bloquée au moyen d'un dispositif de roue libre (22).

2. Ensemble selon la revendication 1, **caractérisé en ce qu'**un dispositif de roue libre (22) est prévu entre au moins l'une des machines électriques ($E_1$, $E_2$) et la transmission intermédiaire (20).

3. Ensemble selon la revendication 2, **caractérisé en ce que** le dispositif de roue libre (22) peut être débloqué et/ou commuté en direction de son blocage.

4. Ensemble selon l'une des revendications 1 à 3, **caractérisé en ce que** l'ensemble présente deux machines électriques ($E_1$, $E_2$) dont les puissances sont sensiblement égales.

5. Ensemble selon l'une des revendications 1 à 3, **caractérisé en ce qu'**au moins l'une des machines électriques ($E_1$) est une machine synchrone et **en ce qu'**au moins une autre machine électrique ($E_2$) est une machine asynchrone.

6. Ensemble selon la revendication 5, **caractérisé en ce que** la machine synchrone peut être commandée et/ou régulée de manière variable.

7. Ensemble selon la revendication 5 ou 6, **caractérisé en ce que** la machine asynchrone peut être commandée et/ou régulée de manière variable.

8. Ensemble selon l'une des revendications 1 à 7, **caractérisé en ce que** la transmission intermédiaire (20) est une transmission différentielle.

9. Ensemble selon l'une des revendications 1 à 7, **caractérisé en ce que** la transmission intermédiaire (20) est une transmission à planétaires.

10. Ensemble selon l'une des revendications 1 à 9, **caractérisé en ce qu'**en fonctionnement à charge partielle et lorsque le couple de rotation ($M_A$) demandé est bas et la vitesse de rotation ($n_A$) demandée est élevée, les deux machines électriques ($E_1$, $E_2$) peuvent être entraînées, la machine électrique ($E_1$) fonctionnant à basse vitesse de rotation ($n_1$) bénéficiant au moyen du dispositif de roue libre (22) d'un couple de soutien qui s'oppose au couple de rotation ($M_2$) délivré par l'autre machine électrique ($E_2$) lorsque la vitesse de rotation de la machine électrique ($E_1$) devient inférieure à zéro.

11. Ensemble selon l'une des revendications 1 à 10, **caractérisé en ce qu'**en fonctionnement à pleine charge et lorsque le couple de rotation ($M_A$) demandé est élevé et la vitesse de rotation ($n_A$) demandée est basse, l'une des machines électriques ($E_2$) peut être entraînée tandis que la machine électrique ($E_1$) non entraînée est bloquée au moyen d'un dispositif de roue libre (22).

12. Ensemble selon l'une des revendications 1 à 11, **caractérisé en ce qu'**en fonctionnement en récupération, au moins l'une des machines électriques ($E_1$, $E_2$) peut être utilisée comme générateur.

13. Ensemble selon la revendication 12, **caractérisé en ce que** lorsque le couple demandé sur l'arbre entraîné (21) est négatif ($-M_A$), l'une des machines électriques ($E_2$) peut être utilisée comme générateur.

14. Ensemble selon la revendication 12 ou 13, **caractérisé en ce que** lorsque le couple demandé sur l'arbre entraîné (21) est négatif ($-M_A$), les deux machines électriques ($E_1$, $E_2$) peuvent être utilisées comme générateur.

15. Ensemble selon l'une des revendications 12 à 14, **caractérisé en ce que** lorsque le couple demandé sur l'arbre entraîné (21) est négatif ($-M_A$), seule une des machines électrique ($E_2$) peut d'abord être utilisée comme générateur et **en ce que** cette machine électrique peut de plus être branchée en générateur après l'accélération de l'autre machine électrique ($E_1$) jusqu'à une vitesse de rotation de fonctionnement ($n_1$).

16. Ensemble selon l'une des revendications 1 à 15, **caractérisé en ce que** le sens de rotation d'au moins l'une des machines électriques ($E_1$, $E_2$) peut être inversé.

17. Ensemble selon l'une des revendications 1 à 16, **caractérisé en ce qu'**en cas d'inversion du sens de rotation de l'une des machines électriques ($E_2$), l'autre machine électrique ($E_1$) peut être utilisée comme générateur pour soutenir le couple.

**18.** Ensemble selon l'une des revendications 1 à 17, **caractérisé en ce qu'**en cas d'inversion du sens de rotation de l'une des machines électriques ($E_2$), le dispositif de roue libre (22) peut être commuté dans sa position de blocage pour soutenir le couple.

**19.** Procédé de conversion d'énergie électrique en énergie mécanique et inversement, destiné à entraîner un véhicule et/ou récupérer de l'énergie lors du freinage de ce dernier, dans lequel au moins deux machines électriques ($E_1$, $E_2$) accouplées l'une à l'autre au moyen d'une transmission intermédiaire (20) entraînent un arbre entraîné (21) ou sont entraînées par ce dernier, les machines électriques ($E_1$, $E_2$) étant commandées et/ou régulées de manière variable en fonction de la vitesse de rotation ($n_A$) demandée et/ou du couple de rotation ($M_A$) demandé sur l'arbre entraîné (21),
**caractérisé en ce que**
la commande et/ou la régulation des machines électriques ($E_1$, $E_2$) s'effectuent avec une optimisation du rendement et **en ce qu'**en fonctionnement à charge partielle, lorsque la vitesse de rotation ($n_A$) demandée est basse et lorsque le couple de rotation ($M_A$) demandé est bas, l'une des machines électriques ($E_2$) délivre la totalité de la puissance de sortie tandis que la machine électrique non entraînée ($E_1$) est bloquée au moyen d'un dispositif de roue libre (22).

**20.** Procédé selon la revendication 19, **caractérisé en ce que** la vitesse de rotation de sortie ($n_A$) de l'arbre entraîné (21) correspond à une moyenne des différentes vitesses de rotation ($n_1$, $n_2$) des machines électriques ($E_1$, $E_2$).

**21.** Procédé selon la revendication 19 ou 20, **caractérisé en ce que** le couple de rotation de sortie ($M_A$) sur l'arbre entraîné (21) correspond à la somme des différents couples de rotation ($M_1$, $M_2$) délivrés par les machines électriques ($E_1$, $E_2$).

**22.** Procédé selon l'une des revendications 19 à 21, **caractérisé en ce que** la puissance de sortie ($P_A$) à l'arbre entraîné (21) correspond à la somme des différentes puissances ($P_1$, $P_2$) délivrées par les machines électriques ($E_1$, $E_2$).

**23.** Procédé selon l'une des revendications 19 à 22, **caractérisé en ce qu'**en fonctionnement à charge partielle, lorsque le couple de rotation ($M_A$) demandé est bas et la vitesse de rotation ($n_A$) demandée est élevée, les deux machines électriques ($E_1$, $E_2$) sont entraînées, la machine électrique ($E_1$) fonctionnant lorsque la vitesse de rotation ($n_1$) demandée est basse pouvant bénéficier au moyen du dispositif de roue libre (22) d'un couple de soutien qui s'oppose au couple de rotation ($M_2$) délivré par l'autre machine électrique ($E_2$).

**24.** Procédé selon l'une des revendications 19 à 23, **caractérisé en ce qu'**en fonctionnement à pleine charge, lorsque le couple de rotation ($M_A$) demandé est élevé et la vitesse de rotation ($n_A$) demandée est basse, seule l'une des machines électriques ($E_2$) est entraînée tandis que la machine électrique ($E_1$) non entraînée est bloquée au moyen d'un dispositif de roue libre (22).

**25.** Procédé selon l'une des revendications 19 à 24, **caractérisé en ce qu'**en fonctionnement en récupération, au moins l'une des machines électriques ($E_1$, $E_2$) est utilisée comme générateur.

**26.** Procédé selon la revendication 25, **caractérisé en ce que** lorsque le couple demandé sur l'arbre entraîné (21) est négatif ($-M_A$), seule l'une des machines électriques ($E_2$) est utilisée comme générateur.

**27.** Procédé selon la revendication 25 ou 26, **caractérisé en ce que** lorsque le couple demandé sur l'arbre entraîné (21) est négatif ($-M_A$), les deux machines électriques ($E_1$, $E_2$) sont utilisées comme générateur.

**28.** Procédé selon l'une des revendications 25 à 27, **caractérisé en ce qu'**au cas où le couple demandé sur l'arbre entraîné (21) est négatif ($-M_A$), seule l'une des machines électriques ($E_2$) est d'abord utilisée comme générateur et **en ce qu'**après l'accélération de l'autre machine électrique ($E_1$) jusqu'à une vitesse de rotation de fonctionnement ($n_1$), elle est de plus raccordée en tant que générateur.

**29.** Procédé selon l'une des revendications 19 à 28, **caractérisé en ce que** le sens de rotation d'au moins l'une des machines électriques ($E_1$, $E_2$) peut être inversé.

**30.** Procédé selon l'une des revendications 19 à 29, **caractérisé en ce qu'**en cas d'inversion du sens de rotation de l'une des machines électriques ($E_2$), l'autre machine électrique ($E_1$) est utilisée comme générateur pour soutenir le couple.

**31.** Procédé selon l'une des revendications 19 à 29, **caractérisé en ce que** pour soutenir le couple en cas d'inversion du sens de rotation de l'une des machines électriques ($E_2$), le dispositif de roue libre (22) est commuté dans sa direction de blocage.

Fig.1a

$E_1$    22    20    $E_2$

18    16    14    21    16    18

Fig.1b

$n_1$    $n_A$    $n_2$

$M_A$

$M_2$

$M_1$

Fig.2a

$P_A = 10\,kW$
$\eta = 85\%$

Fig.2b

M [Nm]

$P_{max}$

$P_{konst}$

800

600

$M_1 = M_2$

85%

80

$P_1 = 0\,kW$

$P_2 = 10\,kW$
$\eta_2 = 85\%$

v [km/h]

Fig.3a

$P_A = 20\,kW$
$\eta = 90\%$

Fig.3b

Fig.4a

$P_A = 30\,kW$
$\eta = 88\%$

Fig.4b

$P_1 = 10\,kW$
$\eta_1 = 83\%$

$P_2 = 20\,kW$
$\eta_2 = 90\%$

Fig.5a

$P_A = 40\,kW$
$\eta = 90\%$

Fig.5b

$P_1 = 20\,kW$
$\eta_1 = 90\%$

$P_2 = 20\,kW$
$\eta_2 = 90\%$

Fig.6a

$n_1$

$n_A$

$n_2$

$M_A$

$M_2$

$M_1$

$P_A = 10\,kW$
$\eta = 85\%$

Fig.6b

$M_1 = M_2$
1400

$M$

85%

$P_{max}$

$P_{konst}$

80

$v$

$P_1 = 0\,kW$

$P_2 = 10\,kW$
$\eta_2 = 85\%$

Fig.7a

$P_A = -20\,kW$

Fig.7b

$P_1 = 0\,kW$

$P_2 = -20\,kW$

Fig.8a

$P_A = -20\,kW$

$P_1 = -10\,kW$          $P_2 = -10\,kW$

Fig.8b

22

Fig.9a

$n_1$  $n_A$  $n_2$

$M_1$

$M_2$

$M_A$

$P_A = 10\,kW$

Fig.9b

$P_{max}$

$P_{konst}$

85%

$P_1 = 0\,kW$

$P_2 = 10\,kW$

Fig.10a

Fig.10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5365153 A
- US 6414437 B2
- WO 9305567 A
- EP 0838359 A
- US 6248036 B1
- US 2001049570 A1